# EUROPEAN PATENT APPLICATION

(11) **EP 4 786 865 A1**
(43) Date of publication of application: **05.08.2026**
(21) Application number: 25859479.5
(22) Date of filing: 01.09.2025
(51) Int. Cl.: F24F 1/0011, F24F 1/0057, F24F 13/14, F24F 13/15, F24F 13/08, F24F 13/32

(54) **INDOOR AIR-CONDITIONING UNIT**

(30) Priority: 02.09.2024 CN 202411224017
(71) Applicant: Xiaomi Technology (Wuhan) Co., Ltd., Wuhan, Hubei 430000 (CN); Xiaomi Smart Appliances (Wuhan) Co., Ltd., Wuhan, Hubei 430073 (CN); Beijing Xiaomi Mobile Software Co., Ltd., Beijing 100085 (CN)
(72) Inventor: MU, Yuan, Wuhan, Hubei 430000 (CN); ZHENG, Liming, Wuhan, Hubei 430000 (CN); ZHANG, Huazhong, Wuhan, Hubei 430000 (CN); XIONG, Benwen, Wuhan, Hubei 430000 (CN); WU, Junhong, Wuhan, Hubei 430000 (CN)
(74) Representative: Dehns Germany Partnerschaft mbB
(86) International application number: PCT/CN2025/118330
(87) International publication number: WO 2026/046406

(57) **Abstract**

Provided is an indoor air-conditioning unit, comprising a base, an air guide frame, a mounting seat, and a motor, wherein the air guide frame is detachably mounted on the base, the air guide frame extends along a first direction and is provided with a recess and an accommodating cavity, the recess is disposed at at least one end of the air guide frame in the first direction, and the recess is used for providing clearance for a driving mechanism for driving an air guide plate to move; the mounting seat is detachably mounted on the air guide frame and located on the side of the air guide frame facing the base, and the mounting seat is arranged opposite to the accommodating cavity; and the motor is detachably mounted on the mounting seat, at least part of the motor is embedded in the accommodating cavity, and the motor is used for driving air blowing plates to swing.

## Description

### CROSS-REFERENCE TO RELATED APPLICATION

The present application claims the priority of Chinese patent application serial No. 2024112240175, filed on September 2, 2024 in China, the content of which is incorporated herein by reference.

### FIELD

The present disclosure relates to a field of air conditioning technologies, and more particularly to an air conditioner indoor unit.

### BACKGROUND

A wall-mounted air conditioner is a type of air conditioning device where an indoor unit is suspended on a wall. Currently, to achieve top-mounted installation and expand the air-swept area of the wall-mounted indoor unit, some manufacturers design the indoor unit to the form of a lower air inlet and an upper air outlet. This change in the direction of air inlet and outlet renders the original internal structural arrangement of the indoor unit unable to meet design requirements. Additionally, some originally integrated structural components face difficulties in demoulding during manufacturing, posing challenges for processing and production.

### SUMMARY

Embodiments of the present disclosure seek to solve at least one of the problems existing in the related art to at least some extent.

Therefore, embodiments of the present disclosure provide an air conditioner indoor unit, in which a base, an air guiding frame, and a mounting seat of the air conditioner indoor unit are all separate structures, which facilitates the respective production and processing, and improves the convenience of production. Secondly, the overall layout is reasonable, and the assembly fit with a driving mechanism and a motor is also realized, and the overall space utilization rate is improved.

The air conditioner indoor unit of embodiments of the present disclosure includes:
a base;
an air guiding frame detachably assembled to the base, the air guiding frame extending along a first direction and having a recess and an accommodating cavity, the recess being arranged at at least one end of the air guiding frame in the first direction and configured to avoid a drive mechanism for driving an air deflector to move;
a mounting seat detachably assembled to the air guiding frame and located on a side of the air guiding frame facing the base, the mounting seat being arranged opposite the accommodating cavity; and
a motor detachably assembled to the mounting seat, at least a portion of the motor being embedded in the accommodating cavity, and the motor being configured to drive an air swinging plate to swing.

In some embodiments, at least a portion of a peripheral edge of the recess includes a folded edge, the folded edge extends along a second direction toward one side of the air guiding frame, the second direction is perpendicular to the first direction, and the folded edge is configured to shield a gap on a peripheral side of the recess.

In some embodiments, the folded edge includes a first folded edge and a second folded edge, the first folded edge and the second folded edge are arranged opposite each other in the first direction, and at least a portion of the recess is located between the first folded edge and the second folded edge.

In some embodiments, one of the base and the air guiding frame has a first plug-in hole, and the other of the base and the air guiding frame includes a first plug-in portion, the first plug-in portion is inserted and fitted in the first plug-in hole to achieve a plug-in assembling of the base and the air guiding frame.

In some embodiments, an insertion direction of the first plug-in hole and the first plug-in portion is a second direction perpendicular to the first direction, and the base and the air guiding frame are arranged opposite each other in the second direction.

In some embodiments, the first plug-in hole is arranged on the base, the first plug-in portion is arranged on the air guiding frame, a plurality of the first plug-in holes and a plurality of the first plug-in portions are provided, both the plurality of first plug-in holes and the plurality of first plug-in portions are arranged at intervals along the first direction, and the plurality of first plug-in portions are respectively inserted and fitted in the plurality of first plug-in holes in a one-to-one correspondence; and/or
the base and the air guiding frame are connected by a first fastener, the base includes a first pillar connected to the first fastener, and the air guiding frame has a first fixing hole for the first fastener to pass through.

In some embodiments, the air conditioner indoor unit includes a motor cover, in which the motor cover is arranged opposite the recess in a second direction orthogonal to the first direction, one of the motor cover and the air guiding frame has a second plug-in hole, and the other of the motor cover and the air guiding frame includes a second plug-in portion, and the second plug-in portion is inserted and fitted in the second plug-in hole to achieve a plug-in assembling of the air guiding frame and the motor cover.

In some embodiments, the second plug-in hole is arranged on the air guiding frame, the second plug-in portion is arranged on the motor cover, the second plug-in portion includes a plurality of plates, each plate extends along the second direction, inner edges of the plurality of plates are connected, and the plurality of plates are arranged at intervals along a circumferential direction of the second plug-in portion; and/or
the motor cover and the air guiding frame are connected by a second fastener, the motor cover includes a second pillar connected to the second fastener, and the air guiding frame has a second fixing hole for the second fastener to pass through.

In some embodiments, the air conditioner indoor unit includes a heat exchanger, in which a bracket is arranged at an end of the heat exchanger in the first direction; and
in which one of the bracket and the air guiding frame has a third plug-in hole, and the other of the bracket and the air guiding frame includes a third plug-in portion, and the third plug-in portion is inserted and fitted in the third plug-in hole; and/or
the bracket and the air guiding frame are connected by a third fastener, the bracket includes a third pillar connected to the third fastener, and the air guiding frame has a third fixing hole for the third fastener to pass through.

In some embodiments, the air guiding frame is connected to the mounting seat by fourth fasteners, one of the air guiding frame and the mounting seat includes a plurality of fourth pillars connected to the fourth fasteners, and the other of the air guiding frame and the mounting seat has a plurality of first holes for the fourth fasteners to pass through.

In some embodiments, the plurality of fourth pillars are arranged on the air guiding frame, the mounting seat includes a plurality of bosses, the plurality of bosses protrude from an inner side of the mounting seat and form grooves on an outer side of the mounting seat facing away from the base, the plurality of fourth pillars are inserted and fitted in the grooves, and the first holes are arranged in bottom walls of the grooves.

In some embodiments, the mounting seat includes a first plate portion and a second plate portion arranged in a staggered manner in an inner-outer direction of the mounting seat, and the bosses are arranged on the first plate portion and the second plate portion; and/or
one of the air guiding frame and the mounting seat includes a snap, and the other of the air guiding frame and the mounting seat has a snap groove, and the snap is snap-fitted in the snap groove.

In some embodiments, the motor is connected to the mounting seat by fifth fasteners, a plurality of fifth pillars connected to the fifth fasteners are arranged on an outer side of the mounting seat facing the accommodating cavity, and the motor has a plurality of second holes for the fifth fasteners to pass through.

In some embodiments, a plurality of positioning ribs are arranged on an outer peripheral side of each fifth pillar, the plurality of positioning ribs protrude beyond an end of the fifth pillar facing the accommodating cavity, the plurality of positioning ribs are arranged at intervals along a circumferential direction of the fifth pillar, the motor has a lug plate, the lug plate is fitted within a space enclosed by the plurality of positioning ribs to achieve assembling and positioning of the motor and the mounting seat, and the second hole is arranged in the lug plate.

In some embodiments, the mounting seat has a through hole for a drive shaft of the motor to pass through the mounting seat, the air conditioner indoor unit includes a transmission shaft, an extending direction of the transmission shaft is perpendicular to an extending direction of the drive shaft, an end of the transmission shaft is rotatably connected to the drive shaft, and another end of the transmission shaft is configured to be rotatably connected to a connecting rod for driving the air swinging plate to swing; and
the mounting seat includes a limit shaft located within the through hole, the limit shaft is arranged coaxially with the drive shaft, a side of the transmission shaft facing away from the drive shaft has an insertion groove, and the limit shaft is rotatably assembled in the insertion groove.

In some embodiments, the mounting seat has a wire clamping groove, and the wire clamping groove is arranged at a peripheral edge of the mounting seat and used for clamping a wire.

Beneficial effects: The base, the air guiding frame, and the mounting seat of the air conditioner indoor unit of embodiments of the present disclosure are all separate structures, which facilitates the respective production and processing, and improves the convenience of production. Secondly, the overall layout is reasonable, and the assembly fit with a driving mechanism and a motor is also realized, and the overall space utilization rate is improved.

### BRIEF DESCRIPTION OF THE DRAWINGS

FIG. 1 is a side sectional view of a partial structure of an air conditioner indoor unit according to an embodiment of the present disclosure.
FIG. 2 is a top view of an air conditioner indoor unit according to an embodiment of the present disclosure.
FIG. 3 is a schematic diagram of an arrangement of a recess in an air guiding frame according to an embodiment of the present disclosure.
FIG. 4 is a schematic diagram of a recess fitted with a drive mechanism in an air guiding frame according to an embodiment of the present disclosure.
FIG. 5 is a schematic diagram of an arrangement of a folded edge on a peripheral side of a recess according to an embodiment of the present disclosure.
FIG. 6 is a schematic diagram of an arrangement of a first plug-in hole and a first pillar on a base according to an embodiment of the present disclosure.
FIG. 7 is a schematic diagram of an arrangement of a first plug-in portion and a first fixing hole on an air guiding frame according to an embodiment of the present disclosure.
FIG. 8 is a schematic diagram of an arrangement of a second plug-in portion and a second pillar on a motor cover according to an embodiment of the present disclosure.
FIG. 9 is a schematic diagram of an arrangement of a second plug-in hole on an air guiding frame according to an embodiment of the present disclosure.
FIG. 10 is a schematic diagram of an arrangement of a second fixing hole on an air guiding frame according to an embodiment of the present disclosure.
FIG. 11 is a schematic diagram of an arrangement of a third plug-in portion and a third pillar according to an embodiment of the present disclosure.
FIG. 12 is a schematic diagram of an arrangement of a third plug-in hole and a third fixing hole according to an embodiment of the present disclosure.
FIG. 13 is a schematic diagram of an arrangement of a fastener according to an embodiment of the present disclosure.
FIG. 14 is a rear perspective view and a partially enlarged view of an air conditioner indoor unit according to an embodiment of the present disclosure.
FIG. 15 is a rear perspective view of a mounting seat according to an embodiment of the present disclosure.
FIG. 16 is a front perspective view of a mounting seat according to an embodiment of the present disclosure.
FIG. 17 is a schematic diagram of an assembly of a transmission shaft, a limit shaft, and a connecting rod according to an embodiment of the present disclosure.
Fig. 18 is a longitudinal sectional view at a limit shaft according to an embodiment of the present disclosure.
FIG. 19 is a schematic diagram of an arrangement of a transmission shaft, a connecting rod, and an air swinging plate according to an embodiment of the present disclosure.

### Reference numerals:

1-base; 11-first plug-in hole; 12-first pillar;
2-air guiding frame; 21-recess; 22-folded edge; 221-first folded edge; 222-second folded edge; 23-first plug-in portion; 24-first fixing hole; 25-second plug-in hole; 26-second fixing hole; 27-third plug-in hole; 28-third fixing hole; 29-first fastener; 210-second fastener; 211-third fastener; 212-accommodating cavity; 213-fourth pillar; 214-snap groove;
3-mounting seat; 31-first hole; 32-boss; 33-first plate portion; 34-second plate portion; 35-fifth pillar; 351-positioning rib; 36-snap; 37-through hole; 38-limit shaft; 39-wire clamping groove;
4-motor; 41-drive shaft;
5-heat exchanger; 51-bracket; 511-third plug-in portion; 512-third pillar;
6-drive mechanism;
7-motor cover; 71-second plug-in portion; 711-plate; 72-second pillar;
8-transmission shaft; 81-insertion groove;
9-connecting rod;
10-air swinging plate.

### DETAILED DESCRIPTION OF THE DISCLOSURE

Embodiments of the present disclosure are described in detail below, and examples of the embodiments are illustrated in accompanying drawings. The embodiments described herein with reference to drawings are explanatory, illustrative, and used to generally understand the present disclosure. The embodiments shall not be construed to limit the present disclosure.

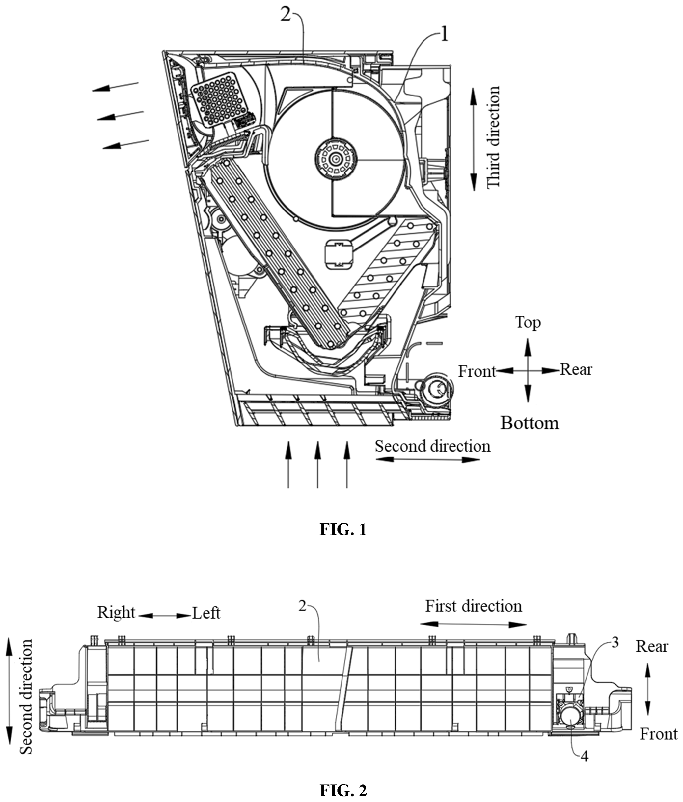

As illustrated in FIGS. 1 and 2, the air conditioner indoor unit includes a base 1, an air guiding frame 2, a mounting seat 3, and a motor 4.

The material of the base 1 may be plastic, metal, or the like. The air guiding frame 2 is detachably assembled to the base 1. For example, the air guiding frame 2 may be assembled to a front side of the base 1 by means of a snap 36, a screw, or the like. A bottom side of the air conditioner indoor unit may be provided with an air inlet, and a front upper side of the air conditioner indoor unit may be provided with an air outlet. The air outlet may be arranged opposite the air guiding frame 2 in a front-rear direction.

During use, indoor air may enter the air conditioner indoor unit through the air inlet and then be discharged from the air outlet through the air guiding frame 2, etc. The black arrows in FIG. 1 indicate the airflow direction.

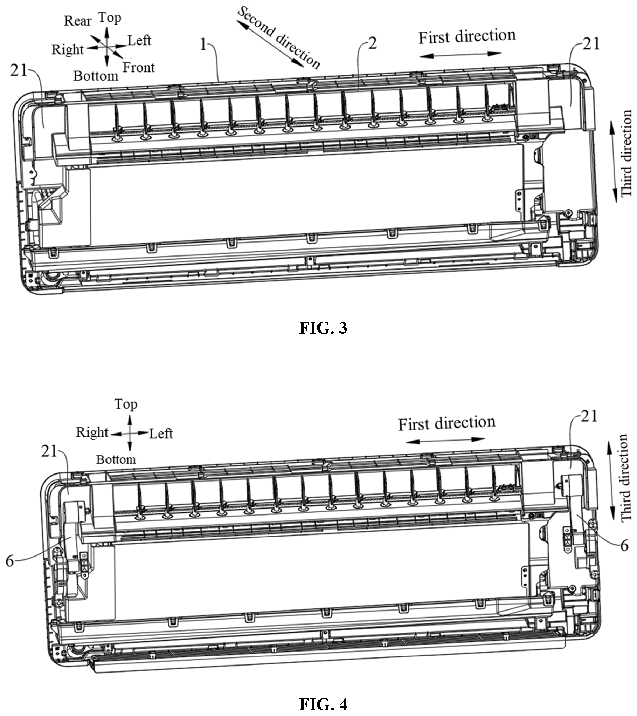

The air guiding frame 2 extends along a first direction and has a recess 21. The recess 21 is arranged at at least one end of the air guiding frame 2 in the first direction and is configured to avoid a drive mechanism 6 for driving an air deflector to move. For example, as illustrated in FIG. 3, the first direction may be a left-right direction. The air guiding frame 2 as a whole may extend along the left-right direction, and recesses 21 may be integrally formed at both left and right ends of the air guiding frame 2. The recess 21 may be a step, groove, or similar structure and may be recessed rearward.

As illustrated in FIG. 4, the drive mechanism 6 may include a motor, a transmission mechanism, etc. The air deflector may be arranged on a front side of the air guiding frame 2 and connected to the drive mechanism 6. The air deflector may be driven by the drive mechanism 6 to swing, facilitating opening or closing of the air outlet or adjustment in the size of the air outlet. The drive mechanism 6 may be located on a front side of the recess 21, and the motor or transmission mechanism may be fitted in the recess 21, avoiding interference during assembly of the drive mechanism 6 and the air guiding frame 2.

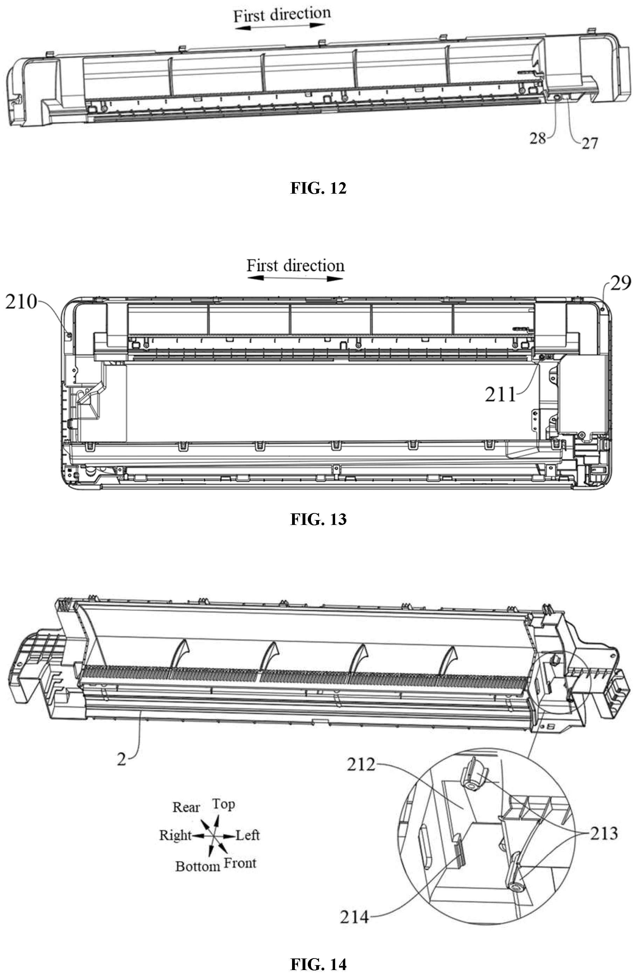

The air guiding frame 2 is further provided with an accommodating cavity 212. For example, the material of the air guiding frame 2 may be plastic, etc. As illustrated in FIGS. 2 and 14, the air guiding frame 2 may be integrally injection-molded and may extend along the left-right direction. The accommodating cavity 212 may be a groove-like structure integrally formed on the air guiding frame 2 and may be located on a left side of the air guiding frame 2.

The mounting seat 3 is detachably assembled to the air guiding frame 2 and is located on a side of the air guiding frame 2 facing the base 1. The mounting seat 3 is arranged opposite the accommodating cavity 212. For example, the material of the mounting seat 3 may be plastic, etc., and the mounting seat 3 may be formed by integral injection molding. As illustrated in FIG. 2, the mounting seat 3 may be assembled to a rear side of the air guiding frame 2 by screw fastening, snap-fitting, or the like. In the front-rear direction, the accommodating cavity 212 may be located in front of the mounting seat 3. The mounting seat 3 serves to block a rear side of the accommodating cavity 212.

The motor 4 is detachably assembled to the mounting seat 3. At least a portion of the motor 4 is embedded in the accommodating cavity 212. For example, as illustrated in FIG. 2, the motor 4 may be a stepper motor. The motor 4 may be fixed to a front side of the mounting seat 3 by screw fastening, snap-fitting, or the like. The entire motor 4 may be inserted into the accommodating cavity 212, facilitating installation and fixation of the motor 4, achieving a conforming match between the air guiding frame 2 and the motor 4, and also providing a protective effect for the motor 4.

It should be noted that the motor 4 may also be connected to a plurality of air swinging plates 10 via a corresponding transmission mechanism. During use, rotation of the motor 4 may drive the plurality of air swinging plates 10 to swing synchronously, enabling adjustment of an air supply direction, a gentle breeze mode (which requires micro-holes for airflow to pass through distributed on each air swinging plate 10), and the like.

In the air conditioner indoor unit of embodiments of the present disclosure, the air guiding frame 2 is designed independently of the base 1, allowing the air guiding frame 2 to be processed independently. This facilitates demolding of the air guiding frame 2 during injection molding and facilitates the processing and production of the air guiding frame 2. The air guiding frame 2 and the mounting seat 3 of the air conditioner indoor unit are provided as separate pieces, facilitating demolding during processing of the mounting seat 3 and also improving convenience of installation and disassembly.

Furthermore, providing the recess 21 on the air guiding frame 2 may enhance conforming cooperation with the drive mechanism 6, and providing the accommodating cavity 212 on the air guiding frame 2 may enhance conforming cooperation with the motor 4, increasing assembly compactness and being conducive to improving overall space utilization.

In some embodiments, at least a portion of a peripheral edge of the recess 21 includes a folded edge 22. The folded edge 22 extends along a second direction toward one side of the air guiding frame 2. The second direction is perpendicular to the first direction. The folded edge 22 is configured to shield a gap on a peripheral side of the recess 21.

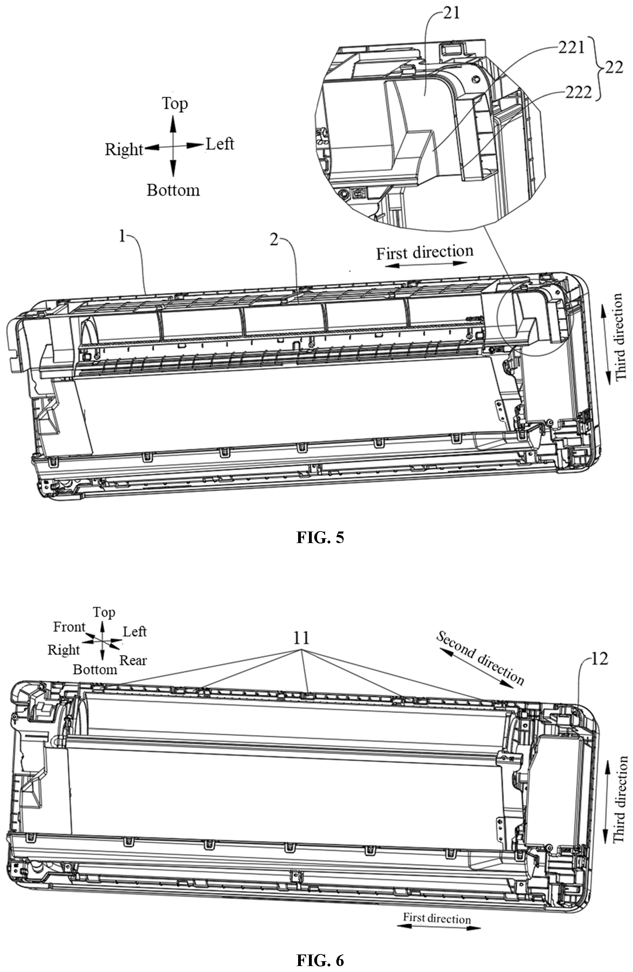

For example, the second direction may be the front-rear direction. As illustrated in FIG. 5, the air guiding frame 2 is installed on the front side of the base 1. The folded edge 22 may be integrally formed on a front side of the air guiding frame 2. The folded edge 22 may be a plate-like structure protruding toward the front side of the air guiding frame 2 and may extend along the peripheral edge of the recess 21.

During assembly, an appearance panel or other appearance component assembled on the front side of the air guiding frame 2 may abut against a front side of the folded edge 22. The folded edge 22 serves to shield a gap between the air guiding frame 2 and the appearance component. That is, when viewed from the front, due to the shielding of the folded edge 22, only the recess 21 is visible, and the gap between the appearance component and the air guiding frame 2 is not visible, avoiding a dark gap exposure and improving overall aesthetics.

In some embodiments, the folded edge 22 includes a first folded edge 221 and a second folded edge 222. The first folded edge 221 and the second folded edge 222 are arranged opposite each other in the first direction. At least a portion of the recess 21 is located between the first folded edge 221 and the second folded edge 222.

For example, as illustrated in FIG. 5, the first folded edge 221 may be located on a right side of the recess 21, and the second folded edge 222 may be located on a left side of the recess 21. Both the first folded edge 221 and the second folded edge 222 may be plate-shaped and arranged opposite each other in the left-right direction. A portion of the recess 21 may be located between the first folded edge 221 and the second folded edge 222. Thus, the first folded edge 221 and the second folded edge 222 may respectively shield gaps on left and right sides of the recess 21.

In some embodiments, one of the base 1 and the air guiding frame 2 has a first plug-in hole 11, and the other of the base 1 and the air guiding frame 2 includes a first plug-in portion 23. The first plug-in portion 23 is inserted and fitted in the first plug-in hole 11 to achieve a plug-in assembling of the base 1 and the air guiding frame 2.

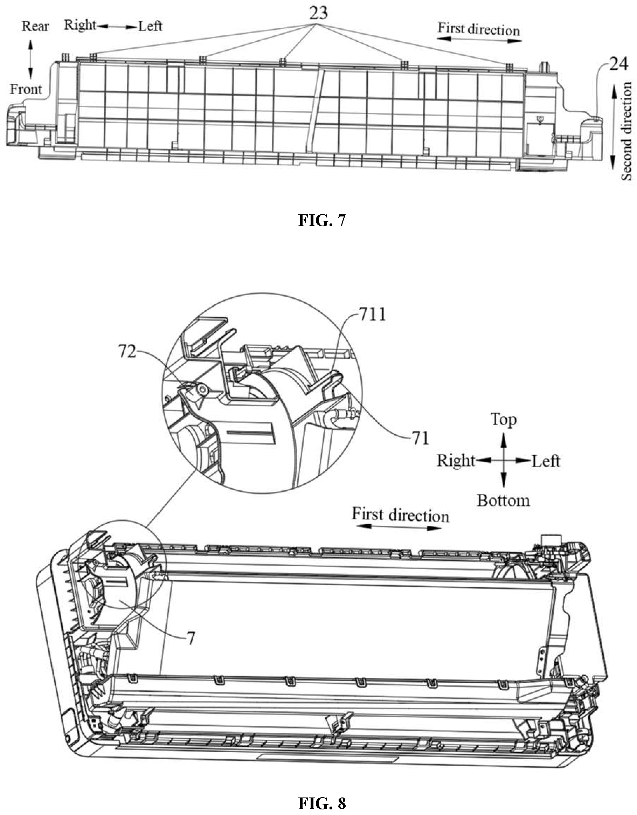

For example, as illustrated in FIG. 6, the first plug-in hole 11 may be arranged on a top of the base 1 and located on a front side of the base 1. As illustrated in FIG. 7, the first plug-in portion 23 may be integrally formed on a top of the air guiding frame 2 and located on a rear side of the air guiding frame 2. During assembly, the first plug-in portion 23 on the air guiding frame 2 may be directly inserted and fitted in the first plug-in hole 11, achieving pre-fixing of the air guiding frame 2 and the base 1 and facilitating improvement of assembly efficiency.

In other embodiments, the first plug-in portion 23 may also be arranged on the base 1, and the first plug-in hole 11 may be formed on the air guiding frame 2.

In some embodiments, an insertion direction of the first plug-in hole 11 and the first plug-in portion 23 is a second direction perpendicular to the first direction. The base 1 and the air guiding frame 2 are arranged opposite each other in the second direction.

For example, the second direction may be the front-rear direction. The base 1 faces and is arranged proximate to a wall. At this time, since the insertion direction of the first plug-in portion 23 and the first plug-in hole 11 is the front-rear direction, the first plug-in hole 11 on the air guiding frame 2 may be directly inserted and fitted in the first plug-in hole 11 from front to rear, improving convenience of assembly and disassembly.

In some embodiments, as illustrated in FIG. 6, the first plug-in hole 11 is arranged on the base 1. As illustrated in FIG. 7, the first plug-in portion 23 is arranged on the air guiding frame 2. A plurality of the first plug-in holes 11 and a plurality of the first plug-in portions 23 are provided. Both the plurality of first plug-in holes 11 and the plurality of first plug-in portions 23 are arranged at intervals along the first direction, and the first direction is the left-right direction. The plurality of first plug-in portions 23 are inserted and fitted in the plurality of first plug-in holes 11 in a one-to-one correspondence. Thus, structural stability of the assembly of the air guiding frame 2 and the base 1 at various positions in the left-right direction is ensured.

In some embodiments, the base 1 and the air guiding frame 2 are connected by a first fastener 29. The base 1 includes a first pillar 12 connected to the first fastener 29. The air guiding frame 2 has a first fixing hole 24 for the first fastener 29 to pass through.

For example, as illustrated in FIG. 6, the first pillar 12 may be a threaded pillar. The first pillar 12 may be arranged on a left side of the base 1 and may extend in the front-rear direction. A threaded hole is arranged in the first pillar 12. As illustrated in FIG. 7, the first fixing hole 24 may be arranged on a left side of the air guiding frame 2 and may penetrate through the air guiding frame 2 in the front-rear direction. The first fastener 29 may be a screw or the like. During assembly, the first fastener 29 is directly passed through the first fixing hole 24 and threadedly assembled into the first pillar 12, ensuring structural stability of the assembly of the air guiding frame 2 and the base 1.

In some embodiments, the air conditioner indoor unit includes a motor cover 7. The motor cover 7 is arranged opposite the recess 21 in a second direction orthogonal to the first direction. One of the motor cover 7 and the air guiding frame 2 has a second plug-in hole 25, and the other of the motor cover 7 and the air guiding frame 2 includes a second plug-in portion 71. The second plug-in portion 71 is inserted and fitted in the second plug-in hole 25 to achieve a plug-in assembling of the air guiding frame 2 and the motor cover 7.

For example, as illustrated in FIG. 8, the motor cover 7 may be fixed on a left side of the air guiding frame 2 and located on a front side of the air guiding frame 2. The motor cover 7 may have a semi-circular structure. The motor cover 7 is directly opposite the recess 21 in the front-rear direction, so that a motor 4 for driving a fan blade to rotate or the like may be protected within a space enclosed by the motor cover 7 and the recess 21 of the air guiding frame 2.

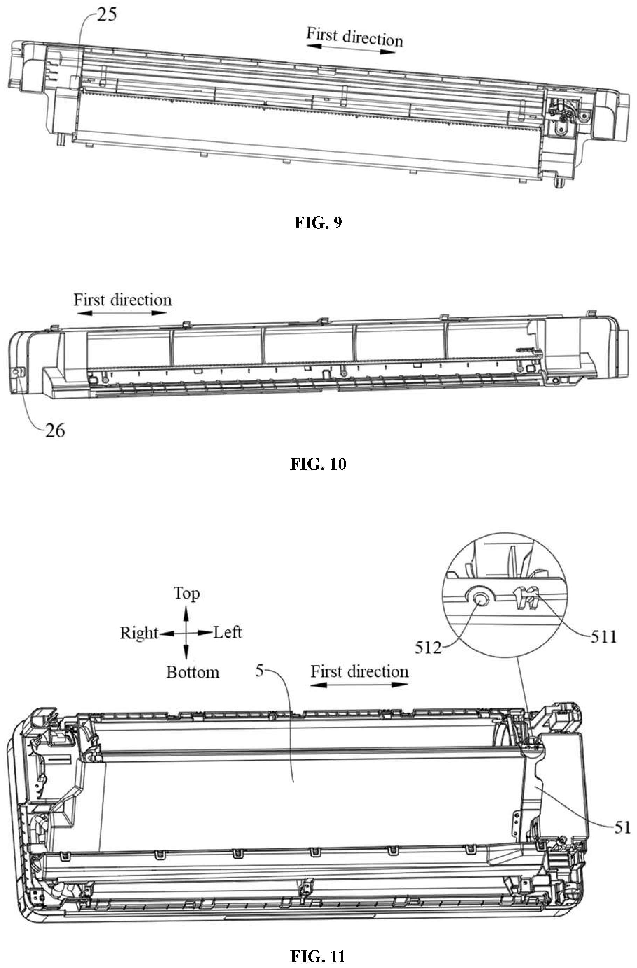

As illustrated in FIG. 8, the second plug-in portion 71 may be integrally formed on a front side of the motor cover 7. The second plug-in portion 71 may be a pillar structure. As illustrated in FIG. 9, the second plug-in hole 25 may be arranged on the air guiding frame 2. The air guiding frame 2 may be located on a front side of the motor cover 7. During assembly, the second plug-in portion 71 may be aligned with and inserted into the second plug-in hole 25, achieving pre-fixing of the air guiding frame 2 and the motor cover 7.

In some embodiments, as illustrated in FIG. 8, the second plug-in hole 25 is arranged on the air guiding frame 2. The second plug-in portion 71 is arranged on the motor cover 7. The second plug-in portion 71 includes a plurality of plates 711. Each plate 711 extends along the second direction. Inner edges of the plurality of plates 711 are connected. The plurality of plates 711 are arranged at intervals along a circumferential direction of the second plug-in portion 71.

For example, each plate 711 may be a rectangular plate. Each plate 711 may extend in the front-rear direction. Sides of the plurality of plates 711 facing a centerline of the plug-in portion may be integrally connected by injection molding, where the centerline may be considered as an axis extending in the front-rear direction. During assembly, an outer long edge of each plate 711 may abut against a hole wall of the second plug-in hole 25, enhancing stability of the plug-in assembling.

In some embodiments, the motor cover 7 and the air guiding frame 2 are connected by a second fastener 210. The motor cover 7 includes a second pillar 72 connected to the second fastener 210. The air guiding frame 2 has a second fixing hole 26 for the second fastener 210 to pass through.

For example, as illustrated in FIG. 8, the second pillar 72 may be integrally formed on a front side of the motor cover 7. The second pillar 72 may be cylindrical and may extend in the front-rear direction. A threaded hole is arranged in the second pillar 72. As illustrated in FIG. 10, the second fixing hole 26 may be arranged on a right side of the air guiding frame 2 and may penetrate through the air guiding frame 2 in the front-rear direction.

The second fastener 210 may also be a screw or the like. During assembly, the second fastener 210 is directly passed through the second fixing hole 26 and threadedly assembled into the second pillar 72, ensuring structural stability of the assembly of the air guiding frame 2 and the motor cover 7.

In some embodiments, the air conditioner indoor unit includes a heat exchanger 5. An end of the heat exchanger 5 in the first direction has a bracket 51. One of the bracket 51 and the air guiding frame 2 has a third plug-in hole 27, and the other of the bracket 51 and the air guiding frame 2 includes a third plug-in portion 511. The third plug-in portion 511 is inserted and fitted in the third plug-in hole 27.

For example, as illustrated in FIG. 11, the heat exchanger 5 may be an evaporator. In other embodiments, the heat exchanger 5 may also serve as a condenser. A left end of the heat exchanger 5 may be fixed with the bracket 51. The third plug-in portion 511 may be integrally formed on the bracket 51. The third plug-in portion 511 may be a protrusion with an H-shaped cross-section. As illustrated in FIG. 12, the third plug-in hole 27 may be arranged on the air guiding frame 2. The third plug-in hole 27 may be arranged adjacent to a left side of the air guiding frame 2.

During assembly, the third plug-in portion 511 may be inserted and fitted in the third plug-in hole 27, achieving plug-in assembling and fixation of the air guiding frame 2 and the heat exchanger 5, and achieving pre-positioning and pre-fixing of both.

In some embodiments, the bracket 51 and the air guiding frame 2 are connected by a third fastener 211. The bracket 51 includes a third pillar 512 connected to the third fastener 211. The air guiding frame 2 has a third fixing hole 28 for the third fastener 211 to pass through.

For example, as illustrated in FIG. 11, the third pillar 512 may be integrally formed on the bracket 51. The third pillar 512 extends in the front-rear direction and has a threaded hole. As illustrated in FIG. 12, the third fixing hole 28 may be arranged on a left side of the air guiding frame 2 and penetrates through the air guiding frame 2 in the front-rear direction.

The third fastener 211 may also be a screw or the like. During assembly, the third fastener 211 is directly passed through the third fixing hole 28 and threadedly assembled into the third pillar 512, ensuring structural stability of the assembly of the air guiding frame 2 and the heat exchanger 5.

In some embodiments, as illustrated in FIG. 13, the first fastener 29, the second fastener 210, and the third fastener 211 may be arranged in a triangular pattern, ensuring structural stability of the fixation of the air guiding frame 2.

In some embodiments, the mounting seat 3 is arranged on an inner side of the air guiding frame 2 for facing the base 1. The motor 4 is arranged on an outer side of the mounting seat 3. It should be noted that, in actual assembly, the air guiding frame 2 may be assembled to a front side of the base 1, where the base 1 faces a wall, and the air outlet may be arranged on a front side of the air guiding frame 2. The inner side of the air guiding frame 2 is the side of the air guiding frame 2 facing the base 1, i.e., the rear side of the air guiding frame 2 in FIG. 14. The outer side of the air guiding frame 2 is the side of the air guiding frame 2 facing an outer appearance panel or the air outlet, i.e., the front side of the air guiding frame 2 in FIG. 14.

Thus, the accommodating cavity 212 of the air guiding frame 2 may protrude forward, allowing the installation of the motor 4 to fully utilize surplus space on the front side of the air guiding frame 2, achieving an optimized design for space utilization.

In some embodiments, the air guiding frame 2 is connected to the mounting seat 3 by fourth fasteners. One of the air guiding frame 2 and the mounting seat 3 includes a plurality of fourth pillars 213 connected to the fourth fasteners, and the other of the air guiding frame 2 and the mounting seat 3 has a plurality of first holes 31 for the fourth fasteners to pass through.

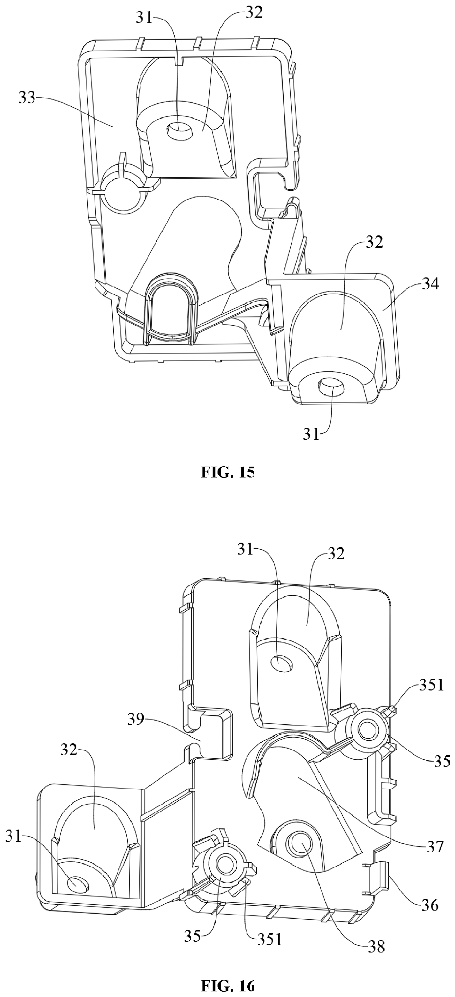

For example, as illustrated in FIG. 14, the fourth pillars 213 may be integrally formed on the air guiding frame 2. The fourth pillars 213 may be cylindrical, and threaded holes may be formed in the fourth pillars 213. As illustrated in FIGS. 15 and 16, the first holes 31 may be circular holes. The first holes 31 may penetrate through the mounting seat 3 in a thickness direction of the mounting seat 3.

The fourth fasteners may be screws or the like. During assembly, the fourth fasteners are passed through the first holes 31 and threadedly assembled with the fourth pillars 213, ensuring structural stability of the connection between the air guiding frame 2 and the mounting seat 3.

In some embodiments, the plurality of fourth pillars 213 are arranged on the air guiding frame 2. The mounting seat 3 has a plurality of bosses 32. The plurality of bosses 32 protrude from an inner side of the mounting seat 3 and form grooves on an outer side of the mounting seat 3 facing away from the base 1. The plurality of fourth pillars 213 are inserted and fitted in the grooves. The first holes 31 are arranged in bottom walls of the grooves.

For example, as illustrated in FIG. 14, two fourth pillars 213 may be provided. Both fourth pillars 213 may be integrally formed on the air guiding frame 2 by injection molding and may be located on a rear side of the air guiding frame 2.

As illustrated in FIGS. 15 and 16, two bosses 32 may be arranged on the mounting seat 3. Both bosses 32 may be integrally formed on the mounting seat 3 by injection molding. The boss 32 may have an arched structure. Each boss 32 may protrude from a rear side of the mounting seat 3 and may define a groove on a front side of the mounting seat 3. A first hole 31 may be arranged on each boss 32.

During assembly, the two fourth pillars 213 on the air guiding frame 2 may be respectively inserted into the grooves of the two bosses 32 in a one-to-one correspondence, enhancing a limiting and constraining effect between the air guiding frame 2 and the mounting seat 3. Furthermore, provision of the bosses 32 may also serve to enhance the structural strength of the mounting seat 3.

In some embodiments, the mounting seat 3 includes a first plate portion 33 and a second plate portion 34 arranged in a staggered manner in an inner-outer direction of the mounting seat 3. The bosses 32 are arranged on the first plate portion 33 and the second plate portion 34.

For example, as illustrated in FIG. 15, the first plate portion 33 and the second plate portion 34 may be plate-shaped, and a dimensional specification of the first plate portion 33 is larger than the dimensional specification of the second plate portion 34. One boss 32 may be integrally formed on each of the first plate portion 33 and the second plate portion 34.

The inner-outer direction of the mounting seat 3 may also be the front-rear direction. The first plate portion 33 may be located in front of the second plate portion 34. During assembly, the first plate portion 33 may be arranged opposite a cavity opening on a rear side of the accommodating cavity 212. The second plate portion 34 may be overlapped on a peripheral side portion of the cavity opening of the accommodating cavity 212, enhancing a limiting and constraining effect between the mounting seat 3 and the air guiding frame 2.

In some embodiments, one of the air guiding frame 2 and the mounting seat 3 includes a snap 36, and the other of the air guiding frame 2 and the mounting seat 3 has a snap groove 214. The snap 36 is snap-inserted and fitted in the snap groove 214.

For example, as illustrated in FIG. 16, the snap 36 may be integrally formed on the mounting seat 3, specifically at a peripheral edge position of the first plate portion 33. As illustrated in FIG. 14, the snap groove 214 may be formed on the air guiding frame 2 and may be located in the accommodating cavity 212.

During assembly, pre-positioning and pre-fixing of the mounting seat 3 and the air guiding frame 2 may first be achieved via snap-fitting cooperation of the snap 36 and the snap groove 214. Then, the air guiding frame 2 and the mounting seat 3 may be connected and fixed by the fourth fasteners, improving assembly efficiency and also enhancing structural stability of the assembly of the air guiding frame 2 and the mounting seat 3.

In some embodiments, the motor 4 is connected to the mounting seat 3 by fifth fasteners. A plurality of fifth pillars 35 connected to the fifth fasteners are arranged on an outer side of the mounting seat 3 facing the accommodating cavity 212. The motor 4 has a plurality of second holes for the fifth fasteners to pass through.

For example, as illustrated in FIG. 16, the fifth pillars 35 may be integrally formed on a front side of the mounting seat 3. Two fifth pillars 35 may be provided. A threaded hole may be formed in each fifth pillar 35. An outer peripheral side of the motor 4 may be provided with a lug plate. Two lug plates may be provided, and each lug plate may have one second hole.

The fifth fasteners may also be screws or the like. During assembly, the fifth fasteners are passed through the second holes and threadedly assembled with the fifth pillars 35, ensuring structural stability of the assembly of the motor 4 and the mounting seat 3.

In some embodiments, a plurality of positioning ribs 351 are arranged on an outer peripheral side of each fifth pillar 35. The plurality of positioning ribs 351 protrude beyond an end of the fifth pillar 35 facing the accommodating cavity 212. The plurality of positioning ribs 351 are arranged at intervals along a circumferential direction of the fifth pillar 35. The motor 4 includes a lug plate. The lug plate is fitted within a space enclosed by the plurality of positioning ribs 351 to achieve assembling and positioning of the motor 4 and the mounting seat 3. The second hole is arranged in the lug plate.

For example, as illustrated in FIG. 16, three positioning ribs 351 may be arranged on an outer peripheral side of each fifth pillar 35. The positioning ribs 351 may extend along an axial direction of the fifth pillar 35. The plurality of positioning ribs 351 may be arranged at equal intervals along the circumferential direction of the fifth pillar 35. Each positioning rib 351 may protrude beyond a free end of the fifth pillar 35, and the free end is an end of the fifth pillar 35 for facing the motor 4. Thus, the three positioning ribs 351 may enclose a groove-like space at the free end of the fifth pillar 35.

During assembly, the lug plate on the outer peripheral side of the motor 4 may first be embedded within the groove-like space enclosed by the positioning ribs 351, achieving pre-positioning during installation of the motor 4. Then, the motor 4 may be connected and fixed to the mounting seat 3 by the fifth fasteners, improving overall assembly efficiency.

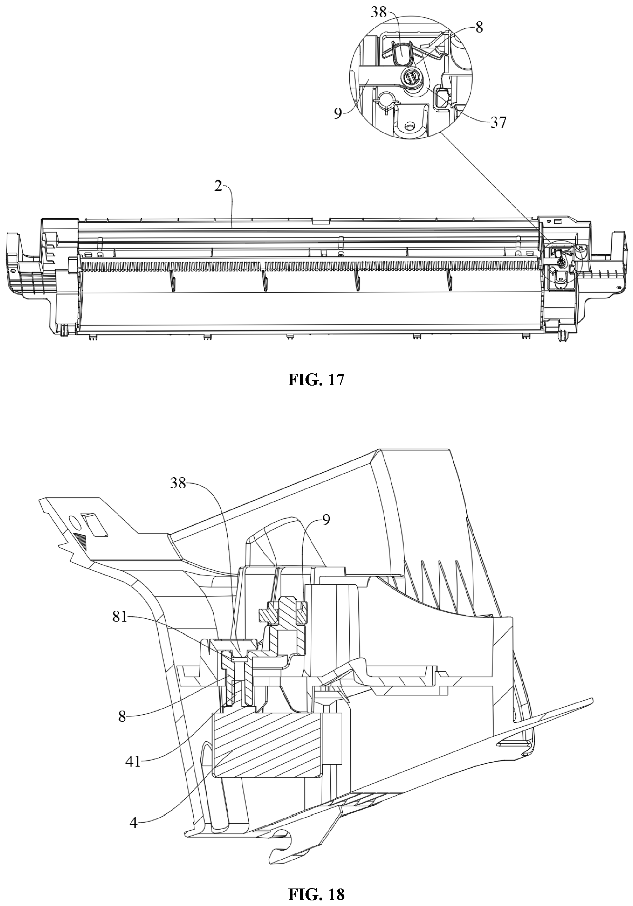

In some embodiments, the mounting seat 3 has a through hole 37. The through hole 37 is configured for a drive shaft 41 of the motor 4 to pass through the mounting seat 3. For example, as illustrated in FIGS. 16 and 17, the through hole 37 may be an irregular hole structure. The drive shaft 41 of the motor 4 installed in the accommodating cavity 212 may extend through the through hole 37 from a rear side of the mounting seat 3, facilitating connection and assembly of the motor 4 with a subsequent transmission shaft 8.

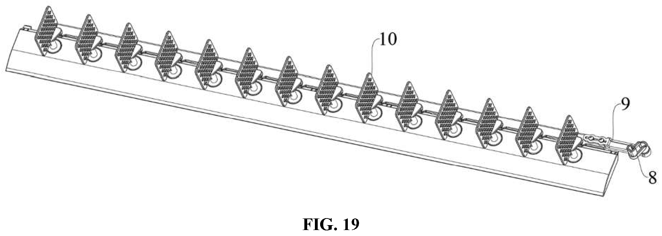

In some embodiments, as illustrated in FIGS. 17 to 19, the air conditioner indoor unit includes a transmission shaft 8. An extending direction of the transmission shaft 8 is perpendicular to an extending direction of the drive shaft 41. An end of the transmission shaft 8 is rotatably connected to the drive shaft 41, and another end of the transmission shaft 8 is configured to be rotatably connected to a connecting rod 9 for driving the air swinging plate 10 to swing.

As illustrated in FIG. 16, the mounting seat 3 includes a limit shaft 38. The limit shaft 38 is located in the through hole 37. For example, an extension portion may be integrally formed on the mounting seat 3. The extension portion may extend in a cantilevered manner into the through hole 37. The limit shaft 38 may be integrally formed on the extension portion.

The limit shaft 38 is arranged coaxially with the drive shaft 41. A side of the transmission shaft 8 facing away from the drive shaft 41 has an insertion groove 81. The limit shaft 38 is rotatably assembled in the insertion groove 81. For example, the transmission shaft 8 may be located between the limit shaft 38 and the drive shaft 41, the drive shaft 41 may be located on a front side of the transmission shaft 8 and the limit shaft 38 may be located on a rear side of the transmission shaft 8. The insertion groove 81 may be a circular insertion groove arranged on the rear side of the transmission shaft 8. The limit shaft 38 may be a circular shaft and may be directly inserted and fitted in the insertion groove 81.

During use, the drive shaft 41 of the motor 4 may drive the transmission shaft 8 to swing. At this time, since the limit shaft 38 is inserted and fitted in the transmission shaft 8 through the insertion groove 81, a situation where the transmission shaft 8 is free-hanging may be avoided, ensuring stability of transmission of the transmission shaft 8, and facilitating driving of each air swinging plate 10 into position through the connecting rod 9.

In some embodiments, the mounting seat 3 has a wire clamping groove 39. The wire clamping groove 39 is arranged at a peripheral edge of the mounting seat 3 and is configured for clamping a wire. For example, as illustrated in FIG. 16, the wire clamping groove 39 may be arranged on the first plate portion 33. A notch may be arranged at a peripheral edge of the first plate portion 33. Two protrusions may be arranged at an opening of the notch. The two protrusions are arranged opposite each other, making the wire clamping groove 39 a constricted opening structure. During use, a wire or the like of the motor 4 may be snap-fitted in the wire clamping groove 39, facilitating limitation and fixation of the wire.

In the description of the present disclosure, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, unless limited otherwise. The specific meanings of the above terms in the present disclosure may be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of' a second feature may include an embodiment in which the first feature is right or obliquely "below," "under," or "on bottom of' the second feature, or just means that the first feature is at a height lower than that of the second feature.

In the present disclosure, reference to "an embodiment," "some embodiments," "an example," "a specific example," or "some examples," means that a particular feature, structure, material, or characteristic described in connection with the embodiment or example is included in at least one embodiment or example of the present disclosure. In the present specification, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

Although the embodiments have been illustrated and described, it would be appreciated by those skilled in the art that the above embodiments cannot be construed to limit the present disclosure, and changes, modifications, alternatives, and variations made in the embodiments of the present disclosure all fall within the scope of the present disclosure.

All embodiments of the present disclosure may be implemented alone or in combination with other embodiments, and are regarded as the scope of protection claims of the present disclosure.

## Claims

1. An air conditioner indoor unit, comprising:
a base;
an air guiding frame detachably assembled to the base, the air guiding frame extending along a first direction and having a recess and an accommodating cavity, the recess being arranged at at least one end of the air guiding frame in the first direction and configured to avoid a drive mechanism for driving an air deflector to move;
a mounting seat detachably assembled to the air guiding frame and located on a side of the air guiding frame facing the base, the mounting seat being arranged opposite the accommodating cavity; and
a motor detachably assembled to the mounting seat, at least a portion of the motor being embedded in the accommodating cavity, and the motor being configured to drive an air swinging plate to swing.

2. The air conditioner indoor unit according to claim 1, wherein at least a portion of a peripheral edge of the recess comprises a folded edge, the folded edge extends along a second direction toward one side of the air guiding frame, the second direction is perpendicular to the first direction, and the folded edge is configured to shield a gap on a peripheral side of the recess.

3. The air conditioner indoor unit according to claim 2, wherein the folded edge comprises a first folded edge and a second folded edge, the first folded edge and the second folded edge are arranged opposite each other in the first direction, and at least a portion of the recess is located between the first folded edge and the second folded edge.

4. The air conditioner indoor unit according to any one of claims 1 to 3, wherein one of the base and the air guiding frame has a first plug-in hole, and the other of the base and the air guiding frame comprises a first plug-in portion, the first plug-in portion is inserted and fitted in the first plug-in hole to achieve a plug-in assembling of the base and the air guiding frame.

5. The air conditioner indoor unit according to claim 4, wherein an insertion direction of the first plug-in hole and the first plug-in portion is a second direction perpendicular to the first direction, and the base and the air guiding frame are arranged opposite each other in the second direction.

6. The air conditioner indoor unit according to claim 4, wherein the first plug-in hole is arranged on the base, the first plug-in portion is arranged on the air guiding frame, a plurality of the first plug-in holes and a plurality of the first plug-in portions are provided, both the plurality of first plug-in holes and the plurality of first plug-in portions are arranged at intervals along the first direction, and the plurality of first plug-in portions are respectively inserted and fitted in the plurality of first plug-in holes in a one-to-one correspondence; and/or
the base and the air guiding frame are connected by a first fastener, the base comprises a first pillar connected to the first fastener, and the air guiding frame has a first fixing hole for the first fastener to pass through.

7. The air conditioner indoor unit according to any one of claims 1 to 6, comprising a motor cover, wherein the motor cover is arranged opposite the recess in a second direction orthogonal to the first direction, one of the motor cover and the air guiding frame has a second plug-in hole, and the other of the motor cover and the air guiding frame comprises a second plug-in portion, and the second plug-in portion is inserted and fitted in the second plug-in hole to achieve a plug-in assembling of the air guiding frame and the motor cover.

8. The air conditioner indoor unit according to claim 7, wherein the second plug-in hole is arranged on the air guiding frame, the second plug-in portion is arranged on the motor cover, the second plug-in portion comprises a plurality of plates, each plate extends along the second direction, inner edges of the plurality of plates are connected, and the plurality of plates are arranged at intervals along a circumferential direction of the second plug-in portion; and/or
the motor cover and the air guiding frame are connected by a second fastener, the motor cover comprises a second pillar connected to the second fastener, and the air guiding frame has a second fixing hole for the second fastener to pass through.

9. The air conditioner indoor unit according to any one of claims 1 to 8, comprising a heat exchanger, wherein a bracket is arranged at an end of the heat exchanger in the first direction; and
wherein one of the bracket and the air guiding frame has a third plug-in hole, and the other of the bracket and the air guiding frame comprises a third plug-in portion, and the third plug-in portion is inserted and fitted in the third plug-in hole; and/or
the bracket and the air guiding frame are connected by a third fastener, the bracket comprises a third pillar connected to the third fastener, and the air guiding frame has a third fixing hole for the third fastener to pass through.

10. The air conditioner indoor unit according to any one of claims 1 to 9, wherein the air guiding frame is connected to the mounting seat by fourth fasteners, one of the air guiding frame and the mounting seat comprises a plurality of fourth pillars connected to the fourth fasteners, and the other of the air guiding frame and the mounting seat has a plurality of first holes for the fourth fasteners to pass through.

11. The air conditioner indoor unit according to claim 10, wherein the plurality of fourth pillars are arranged on the air guiding frame, the mounting seat comprises a plurality of bosses, the plurality of bosses protrude from an inner side of the mounting seat and form grooves on an outer side of the mounting seat facing away from the base, the plurality of fourth pillars are inserted and fitted in the grooves, and the plurality of first holes are arranged in bottom walls of the grooves.

12. The air conditioner indoor unit according to claim 11, wherein the mounting seat comprises a first plate portion and a second plate portion arranged in a staggered manner in an inner-outer direction of the mounting seat, and the bosses are arranged on the first plate portion and the second plate portion; and/or
one of the air guiding frame and the mounting seat comprises a snap, and the other of the air guiding frame and the mounting seat has a snap groove, and the snap is snap-fitted in the snap groove.

13. The air conditioner indoor unit according to any one of claims 1 to 12, wherein the motor is connected to the mounting seat by fifth fasteners, a plurality of fifth pillars connected to the fifth fasteners are arranged on an outer side of the mounting seat facing the accommodating cavity, and the motor has a plurality of second holes for the fifth fasteners to pass through.

14. The air conditioner indoor unit according to claim 13, wherein a plurality of positioning ribs are arranged on an outer peripheral side of each fifth pillar, the plurality of positioning ribs protrude beyond an end of the fifth pillar facing the accommodating cavity, the plurality of positioning ribs are arranged at intervals along a circumferential direction of the fifth pillar, the motor comprises a lug plate, the lug plate is fitted within a space enclosed by the plurality of positioning ribs to achieve assembling and positioning of the motor and the mounting seat, and the second hole is arranged in the lug plate.

15. The air conditioner indoor unit according to any one of claims 1 to 14, wherein the mounting seat has a through hole for a drive shaft of the motor to pass through the mounting seat, the air conditioner indoor unit comprises a transmission shaft, an extending direction of the transmission shaft is perpendicular to an extending direction of the drive shaft, an end of the transmission shaft is rotatably connected to the drive shaft, and another end of the transmission shaft is configured to be rotatably connected to a connecting rod for driving the air swinging plate to swing; and
the mounting seat comprises a limit shaft located in the through hole, the limit shaft is arranged coaxially with the drive shaft, a side of the transmission shaft facing away from the drive shaft has an insertion groove, and the limit shaft is rotatably assembled in the insertion groove.

16. The air conditioner indoor unit according to any one of claims 1 to 15, wherein the mounting seat has a wire clamping groove, and the wire clamping groove is arranged at a peripheral edge of the mounting seat and configured for clamping a wire.
